# FASCICULE DE BREVET EUROPEEN

(11) **EP 4 192 112 B1**
(45) Date de publication et mention de la délivrance du brevet: **24.04.2024**
(21) Numéro de dépôt: 22205707.7
(22) Date de dépôt: 07.11.2022
(51) Int. Cl.: H04W 40/24, H04L 45/028

(54) **PROCÉDÉ D'ADAPTATION DYNAMIQUE DE LA PÉRIODE D'ENVOI DE MESSAGES PAR UN NOEUD D'UN RÉSEAU DE COMMUNICATION SANS FIL DE NOEUDS AD-HOC, PROGRAMME D'ORDINATEUR, NOEUD ET RÉSEAU ASSOCIÉS**
VERFAHREN ZUR DYNAMISCHEN ANPASSUNG DER NACHRICHTENÜBERTRAGUNGSPERIODE DURCH EINEN KNOTEN EINES DRAHTLOSEN AD-HOC-KNOTENKOMMUNIKATIONSNETZWERKS, COMPUTERPROGRAMM UND NETZWERKKNOTEN
METHOD FOR DYNAMICALLY ADAPTING THE MESSAGE SENDING PERIOD BY A NODE OF A WIRELESS COMMUNICATION NETWORK OF AD-HOC NODES, ASSOCIATED COMPUTER PROGRAM, NODE AND NETWORK

(30) Priorité: 02.12.2021 FR 2112833
(43) Date de publication de la demande: 07.06.2023
(73) Titulaire: THALES, 92190 Meudon (FR)
(72) Inventeur: NAVES, Raphaël, 92622 Gennevilliers Cedex (FR); KANANE, Amnay, 75918 Paris (FR); LEENHARDT, Hugo, 92622 Gennevilliers Cedex (FR); ROMBAUX, William, 92622 Gennevilliers Cedex (FR); BOUET, Mathieu, 92622 Gennevilliers Cedex (FR); CONAN, Vania, 92622 Gennevilliers Cedex (FR)
(74) Mandataire: Atout PI Laplace

(56) Documents cités:
- US-A1- 2003 179 742
- MAHMUD IMTIAZ ET AL: "Adaptive Hello Interval in FANET Routing Protocols for Green UAVs", IEEE ACCESS, vol. 7, 15 mai 2019 (2019-05-15), pages 63004-63015, XP011726996, DOI: 10.1109/ACCESS.2019.2917075
- SHARMA DHIRENDRA KUMAR ET AL: "An adaptive hello process for overhead reduction in MANETs", 2015 INTERNATIONAL CONFERENCE ON ELECTRICAL, ELECTRONICS, SIGNALS, COMMUNICATION AND OPTIMIZATION (EESCO), IEEE, 24 janvier 2015 (2015-01-24), pages 1-4, XP033200404, DOI: 10.1109/EESCO.2015.7253980 ISBN: 978-1-4799-7676-8 [extrait le 2015-09-09]
- CARLES GOMEZ ET AL: "AHR", MULTI-HOP AD HOC NETWORKS: FROM THEORY TO REALITY, ACM, 2 PENN PLAZA, SUITE 701NEW YORKNY10121-0701USA, 26 mai 2006 (2006-05-26), pages 98-100, XP058382226, DOI: 10.1145/1132983.1133001 ISBN: 978-1-59593-360-7

## Description

### Domaine technique :

L'invention se situe dans le domaine des réseaux de communication sans fil de noeuds ad-hoc, notamment des réseaux tactiques MANET (Mobile Ad-hoc NETworks).

Plus exactement, l'invention se rapporte à un procédé d'adaptation dynamique de la période d'envoi, T_diff, de messages périodiques émis par un noeud d'un réseau de communication sans fil de noeuds ad-hoc à destination de noeuds du réseau.

### Technique antérieure :

Du fait de l'instabilité inhérente aux réseaux de télécommunication sans fil de noeuds ad-hoc (changement de mission, mobilité des noeuds etc.), il est nécessaire que les noeuds s'envoient entre eux régulièrement des messages pour se renseigner sur le contexte courant. Par exemple, les protocoles de routage utilisés dans les réseaux tactiques ont pour objectif de permettre aux noeuds de construire « des tables de routage » qui seront utilisées par ces derniers pour acheminer/relayer/router les messages reçus vers le(s) noeud(s) destinataire(s) final(aux) de ces messages. Les tables de routage sont des structures maintenues localement par chaque noeud, qui à chaque noeud destination, associent les routes de sortie. Ces routes peuvent comprendre des interfaces de sortie, des noeuds relais intermédiaires, etc.

Les protocoles de routage, comme OLSR (Optimized Link State Routing Protocol), des protocoles dérivés de OLSR (CE-OLSR, BATMAN), ou d'autres protocoles de routage comme RIP (Routing Information Protocol) et BABELpar exemple, comprennent plusieurs phases :
- une phase de diffusion locale d'information de topologie ;
- une phase de diffusion globale d'information de topologie ;
- une phase de calcul des tables de routage.

Dans la phase de diffusion locale d'information de topologie, les noeuds diffusent périodiquement des messages, par exemple des messages « HELLO » à leur voisinage afin d'annoncer leur présence ; ces messages contiennent plusieurs informations telles que l'identifiant du noeud émetteur, la liste de ses voisins à 1 saut, la durée de validité de l'information, etc.

A la réception d'un message HELLO, un noeud enregistre la source du message dans sa liste des voisins à 1 saut et est également capable d'établir une partie de la liste de ses voisins à 2 sauts.

Dans la phase de diffusion globale d'information de topologie, des messages de « Topology Control», (TC), sont diffusés et relayés par un sous-ensemble de noeuds prédéfinis ou élus dynamiquement à l'ensemble du réseau. Ces messages, qui décrivent notamment les voisinages à 2 sauts de chaque noeud, permettent à l'ensemble des noeuds d'acquérir une vision globale de la topologie du réseau et d'établir le graphe de connexion.

Dans la phase de calcul des tables de routage, à partir des informations de topologie reçues au cours des deux phases de diffusion, les noeuds calculent les tables de routage nécessaires au routage des messages.

Aujourd'hui, les messages périodiques, par exemple HELLO et TC dans OLSR et ses dérivés ou les Request Messages dans RIP (il en existe d'autres), sont généralement envoyés périodiquement, à période fixe, quels que soient l'état du réseau et les conditions opérationnelles. Plusieurs problèmes majeurs se posent alors, exposés ci-après.

A période d'envoi fixe faible, le nombre élevé de messages échangés peut entraîner une consommation excessive de la bande passante, en particulier quand la topologie du réseau est stable (noeuds immobiles par exemple). En effet, dans cette situation, on pourrait imaginer réduire le nombre de messages envoyés dans la mesure où les noeuds n'ont pas à découvrir de nouveaux noeuds ni de nouvelles routes.

A période d'envoi fixe élevée, les échanges peu fréquents ne sont pas suffisants pour assurer une découverte efficace de son voisinage et pour que les noeuds acquièrent une connaissance globale du réseau suffisamment proche de la réalité, en particulier quand la topologie du réseau est instable (forte mobilité des noeuds par exemple).

En pratique, pour chaque famille de réseaux de communication (fantassins, véhiculaires, aériens, etc.), des études préalables sont nécessaires pour déterminer les périodes d'envoi des messages périodiques, par exemple HELLO et TC.

Il est possible d'utiliser des arbres de décision pour adapter dynamiquement les périodes d'envoi des messages périodiques. Cependant, les solutions à arbre de décision requièrent un paramétrage manuel des seuils de décision. De plus, le paramétrage de l'arbre de décision utilisé devra être adapté en fonction de la famille de réseaux pour laquelle la solution est appliquée (véhiculaires, fantassins, ...).

Il existe donc un besoin d'optimiser le séquencement des transmissions périodiques, par exemple les phases de diffusion d'information de topologie dans les réseaux ad-hoc.

Le document "MAHMUD IMTIAZ ET AL: "Adaptive Hello Interval in FANET Routing Protocols for Green UAVs",IEEE ACCESS,vol. 7 , pages 63004-63015" décrit un exemple de procédé d'adaptation dynamique de la période d'envoi, T_diff, de messages périodiques émis par un noeud, N, d'un réseau de communication sans fil de noeuds ad-hoc à destination de noeuds du réseau.

### Résumé de l'invention :

A cet effet, suivant un premier aspect, la présente invention décrit un procédé d'adaptation dynamique de la période d'envoi, T_diff, de messages périodiques par un noeud d'un réseau de communication sans fil de noeuds ad-hoc tel que mentionné plus haut et caractérisé en ce que le noeud comprend un module d'évaluation adapté pour déterminer la prochaine période à appliquer et comprenant un réseau de neurones issu d'une phase d'apprentissage préalable et tel que le réseau de neurones calcule, en fonction d'un vecteur de paramètre(s) qui lui est fourni en entrée et qualifiant la stabilité courante des liens de voisinage du noeud, un score pour chacune d'une pluralité de valeurs distinctes candidates de période d'envoi desdits messages par le noeud, ledit score évaluant la pertinence de la mise en oeuvre de ladite valeur de période d'envoi en fonction dudit vecteur de paramètre(s) ; le procédé comprenant en outre les étapes suivantes mises en oeuvre par ledit noeud toutes les T_calc secondes, T_calc > T_diff:
- fourniture au module d'évaluation d'une valeur actualisée du vecteur de paramètre(s) ; calcul par le réseau de neurones de scores associés chacun à une valeur distincte de période d'envoi en fonction de ladite valeur actualisée du vecteur de paramètre(s) ;
- sélection, par le module d'évaluation, d'une desdites des valeurs distinctes candidates de période d'envoi en fonction des scores calculés ;
- assignation de la valeur sélectionnée à T_diff pendant la durée T_calc.

L'invention propose ainsi une solution générique (pouvant s'appliquer à différentes familles de réseaux, telles que véhiculaires, fantassins ... et à un large panel de scénarios opérationnels) permettant d'adapter dynamiquement, tout au long de la situation opérationnelle, la période d'envoi des messages périodiques. Le vecteur de paramètre(s) qualifie la stabilité courante des liens de voisinage du noeud par rapport à des noeuds à un, deux ou trois sauts par exemple.

Dans des modes de réalisation, un tel procédé comprendra en outre l'une au moins des caractéristiques suivantes :
- lesdits messages émis toutes les T_diff secondes par le noeud sont des messages de contrôle émis conformément à un protocole de routage ;
- Un ou plusieurs paramètres du vecteur de paramètre(s) indique un ou des éléments parmi :
   La position géographique de noeud(s) voisin(s) ;
   La puissance du signal provenant de noeud(s) voisin(s) ;
   Une caractérisation de la table de voisinage du noeud ;
   Par noeud voisin, un nombre de dernières connexions et/ou déconnexions survenues vis-à-vis du noeud voisin ;
   Le voisinage à au moins deux sauts du noeud ;
   L'évolution dans le temps de l'un quelconque de ces éléments.
- le module d'évaluation sélectionne parmi les valeurs distinctes candidates de période d'envoi en fonction de leur score respectif calculé l'une parmi :
   La valeur de période ayant obtenu le meilleur score ;
   La période d'envoi la plus petite parmi les M1 périodes ayant obtenu les meilleurs scores, M1 étant un entier prédéfini strictement inférieur au nombre de valeurs candidates ;
   La période d'envoi la plus grande parmi les M2 périodes ayant obtenu les meilleurs scores, M2 étant un entier prédéfini strictement inférieur au nombre de valeurs candidates ;
- le réseau de neurones est issu d'une phase d'apprentissage par renforcement préalable dans laquelle des scénarios opérationnels d'utilisation du réseau par les noeuds sont joués au cours desquels les étapes suivantes sont réitérées par cycle de T_calc secondes pour chacun d'une pluralité de noeuds :
   Fourniture en entrée du réseau de neurones d'une valeur actualisée du vecteur de paramètre(s) qualifiant la stabilité courante des liens de voisinage du noeud ;
   Calcul par le réseau de neurones de scores associés respectivement aux valeurs distinctes de période d'envoi en fonction de poids affectés respectivement aux neurones ;
   Sélection d'une desdites valeurs de période d'envoi et affectation à T_diff de la valeur sélectionnée pendant la durée T_calc ;
   À l'issue de ladite durée T_calc, actualisation des valeurs des poids affectés à chaque neurone en fonction d'une évaluation du comportement du noeud pendant cette durée et d'une métrique de récompense définie au préalable.

Suivant un autre aspect, l'invention décrit un programme d'ordinateur comprenant des instructions logicielles destinées à être stockées en mémoire d'un noeud d'un réseau de communication sans fil de noeuds ad-hoc et qui lorsqu'elles sont exécutées sur un processeur dudit noeud, mettent en oeuvre le procédé suivant le premier aspect de l'invention. Suivant un autre aspect, l'invention décrit un noeud d'un réseau de communication sans fil de noeuds ad-hoc adapté pour envoyer à la période T_diff des messages périodiques à destination de noeuds du réseau,
caractérisé en ce que le noeud comprend un module d'évaluation adapté pour déterminer la prochaine période à appliquer et comprenant un réseau de neurones issu d'une phase d'apprentissage préalable et tel que le réseau de neurones est adapté pour calculer, en fonction d'un vecteur de paramètre(s) qui lui est fourni en entrée et qualifiant la stabilité courante des liens de voisinage du noeud, un score pour chacune d'une pluralité de valeurs distinctes candidates de période d'envoi desdits messages par le noeud, ledit score évaluant la pertinence de la mise en oeuvre de ladite valeur de période d'envoi en fonction dudit vecteur de paramètre(s) ; dans lequel toutes les T_calc secondes, T_calc > T_diff :
ledit noeud étant adapté pour fournir au module d'évaluation une valeur actualisée du vecteur de paramètre(s) ; le réseau de neurones est adapté pour alors calculer les scores associés chacun à une valeur distincte de période d'envoi en fonction de ladite valeur actualisée du vecteur de paramètre(s) ; le module d'évaluation est adapté pour sélectionner une desdites des valeurs distinctes candidates de période d'envoi en fonction des scores calculés et pour assigner la valeur sélectionnée à T_diff pendant la durée T_calc.

Dans un mode de réalisation, lesdits messages émis toutes les T_diff secondes par le noeud sont des messages de contrôle émis conformément à un protocole de routage. Suivant un encore autre aspect, l'invention décrit un réseau de communication sans fil de noeuds ad-hoc comprenant une pluralité de noeuds ad-hoc suivant le précédent aspect de l'invention. Un noeud 1 utilisera ainsi à un instant Temp une valeur de période potentiellement différente de celle utilisée par un noeud 2 du même réseau au même instant Temp.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 représente schématiquement un réseau de communication de noeuds ad-hoc dans un mode de mise en oeuvre de l'invention ;
[Fig. 2] La figure 2 illustre les étapes d'un procédé mis en oeuvre dans un mode de réalisation de l'invention ;
[Fig. 3] La figure 3 représente un réseau de neurones mis en oeuvre dans un mode de réalisation de l'invention.

Des références identiques peuvent être utilisées dans des figures différentes lorsqu'elles désignent des éléments identiques ou comparables.

### Description détaillée :

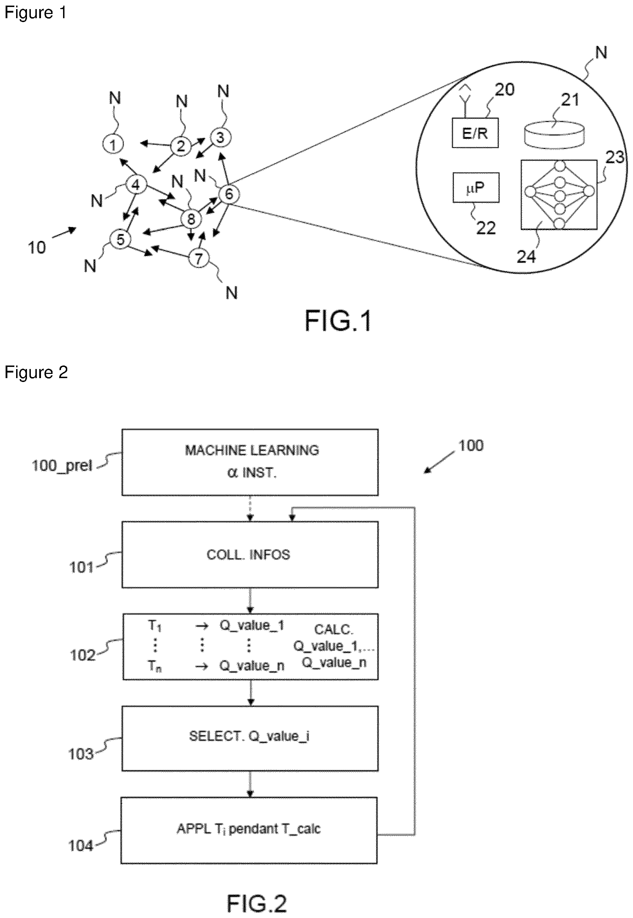

Considérons, en référence à la figure 1, un réseau 10 de communication sans fil ad-hoc comportant des noeuds N ad-hoc. Un tel réseau ad-hoc est sans infrastructure fixe, les noeuds y sont à la fois terminaux et relais. Les noeuds N, ou au moins certains d'entre eux, sont par exemple mobiles et se déplacent de façon autonome les uns par rapport aux autres. Huit noeuds N (référencés 1, 2, 3, 4, 5, 6, 7, 8) ont été représentés, mais le nombre de noeuds dans le réseau peut prendre des valeurs variées, de quelques-uns à 100, 1000 etc.

Chaque noeud N, par exemple un téléphone cellulaire, un ordinateur portable etc., comprend un émetteur-récepteur sans fil 20 par exemple radiofréquence, une mémoire 21, un microprocesseur 22. Chaque noeud est adapté pour échanger des données avec les autres noeuds sur un canal de communication partagé entre eux et attribué par configuration.

Chaque noeud N est adapté en outre pour mesurer des niveaux de puissance des signaux reçus (par exemple des signaux HELLO) en provenance des noeuds voisins et mémoriser ces mesures.

Chaque noeud est adapté pour diffuser périodiquement, toutes les T_diff secondes, des messages périodiques. A titre d'exemple, il est considéré ici que ces messages périodiques sont des messages« HELLO », transmis par le noeud à son voisinage afin d'annoncer sa présence ; ces messages contiennent plusieurs informations telles que l'identifiant dudit noeud, la liste de ses voisins à 1 saut, la durée de validité de l'information, etc.

A la réception d'un message HELLO, chaque noeud enregistre l'identifiant du noeud source du message dans sa liste des voisins à 1 saut et est également capable d'établir une partie de la liste de ses voisins à 2 sauts.

Dans la phase de diffusion globale d'information de topologie, des messages de « Topology Control », (TC), sont diffusés périodiquement, toutes les T_glob secondes, et relayés par un sous-ensemble de noeuds prédéfinis à l'ensemble du réseau. Ces messages, qui décrivent notamment les voisinages à 2 sauts de chaque noeud, permettent à l'ensemble des noeuds d'acquérir une vision globale de la topologie du réseau et de construire le graphe de connexion.

Dans la phase de calcul des tables de routage, à partir des informations de topologie reçues au cours des deux phases de diffusion, les noeuds calculent les tables de routage nécessaires au routage des messages.

Dans l'exemple ci-dessous, il est décrit l'application de la solution pour adapter la valeur de la période d'envoi T_diff par un noeud de ses messages HELLO.

Chaque noeud N comprend, dans le mode de réalisation considéré, un module de sélection de périodes 23. Ce module de sélection de périodes 23 comprend un réseau de neurones 24.

Le réseau de neurones 24 est adapté pour recevoir en entrée un vecteur de paramètre(s) d'informations et pour calculer, en fonction de ce vecteur de paramètre(s), un score pour chaque valeur candidate de période d'envoi de message HELLO.

Par exemple, soient les valeurs candidates, au nombre de n (n supérieur ou égale à 2), notées T1, T2, ..., Tn et le score calculé pour Ti est noté Q_value_i, i = 1 à n. Par exemple n est inférieur ou égal à 5.

Le score Q_value_i évalue la pertinence de déclencher, dans le noeud ayant fourni le vecteur de paramètres d'informations, le remplacement de la valeur courante de période T_diff par la valeur de période Ti. Le score est par exemple une fonction croissante de la pertinence. La pertinence est définie suivant les modes de réalisation en fonction du comportement cible du réseau ; par exemple la pertinence est fonction du temps mis par un noeud pour identifier un nouveau noeud dans le voisinage et de la quantité (en bande passante ou en nombre) de messages Hellos envoyés.

Un procédé 100 d'adaptation dynamique de la période d'envoi de messages par un noeud N du réseau de communication 10, représenté schématiquement en figure 2, comprend tout d'abord une étape préliminaire 100_prél d'apprentissage du réseau de neurones 24, qui permet d'élaborer le réseau de neurones 24, puis de l'installer dans les noeuds N.

Le détail de cette étape préliminaire sera fourni plus loin.

Dans un mode de réalisation, les noeuds N du réseau sont chacun adaptés pour mettre en oeuvre cycliquement, toutes les T_calc secondes, un processus comprenant les étapes 101 à 104 du procédé 100 représentées schématiquement en figure 2. Dans un mode de réalisation, chaque noeud N comporte en outre dans sa mémoire 21 des instructions logicielles, qui, lorsqu'elles sont exécutées sur le microprocesseur 22 du noeud, mettent en oeuvre les étapes, qui lui incombent, de ce processus.

La valeur de T_calc est la même tout au long des itérations du processus ou, dans des modes de réalisation, elle est elle-même adaptée en fonction du contexte du réseau 10 (par exemple en fonction d'un niveau de rapidité d'adaptation requis). T_calc est supérieure ou égale à l'ensemble des valeurs candidates T1, T2, ..., Tn dans un mode de réalisation.

Ainsi, toutes les T_calc secondes (avec par exemple T_calc comprise entre 1 seconde et 600 secondes, par exemple égale à 20s), chaque noeud N calcule, de manière indépendante des autres noeuds, la valeur de période d'envoi T_diff que ce noeud va utiliser durant les T_calc prochaines secondes. Les calculs étant indépendants sur chaque noeud, les noeuds n'obtiendront pas forcément la même valeur de période d'envoi. Pour ce faire, chaque noeud effectue les étapes suivantes toutes les T_calc secondes.

Dans une étape 101, le noeud N fournit en entrée du réseau de neurones 24 un ensemble d'informations actualisées. Pour cela, le noeud collecte les informations ou utilise des informations collectées au préalable. Cet ensemble d'informations prend par exemple la forme d'un vecteur de paramètres d'information. Les paramètres d'informations peuvent être de nature différente en fonction des modes de réalisations de l'invention. Ils peuvent être déterminés notamment en fonction des dernières mesures de puissance effectuées par le noeud et/ou des informations déduites des derniers messages HELLO et/ou TC reçus par le noeud et/ou en fonction de la vitesse ou de la distance de déplacement du noeud N depuis T_obs secondes ou encore des informations obtenues depuis une entité autre...

Le vecteur de paramètres d'information, caractérisant la stabilité ou l'instabilité des liens entre le noeud et ses voisins, comporte par exemple un ou plusieurs paramètres d'information. Un paramètre d'information par exemple comporte une ou des informations parmi les suivantes, ou encore est obtenu en fonction de ladite ou lesdites informations, notamment en fonction de leur évolution dans le temps :
- informations sur la position géographique de chaque noeud voisin (coordonnées GPS par exemple) ;
- puissance reçue par le noeud en provenance de chaque noeud voisin, par exemple une cartographie de la puissance reçue avec chacun de ses voisins ;
- évolution de ses tables de voisinage (vecteur associant à chaque voisin la distance en nombre de sauts réseaux) obtenues au cours des L1 dernières secondes ;
- par noeud voisin : nombre de connexions/déconnexions estimées au cours des L2 dernières secondes (L2 valeur fixée) entre le noeud et ce noeud voisin ;
- voisinage à au moins deux sauts du noeud.

Les paramètres du vecteur d'état sont définis de manière à caractériser un état (vu par le noeud émetteur) permettant de définir la période d'envoi à utiliser ; dans un mode de réalisation, les paramètres du vecteur de paramètres dépendent de la fonction du message périodique.

Dans une étape 102, pour chaque période d'envoi Ti possible parmi un ensemble prédéfini (T1, ... Tn), le réseau de neurones 24 renvoie alors un score Q_value_i qualifiant la pertinence de l'action « déclencher l'affectation de la valeur Ti à la période T_diff ». Par exemple ces valeurs sont prises dans l'ensemble {1s, 2s, 5s, 10s, 20s ...}.

Dans une étape 103, en fonction des scores obtenus Q_value_i, i = 1 à n, le module d'évaluation 23 du noeud de communication N sélectionne alors une desdites périodes T1, ..., Tn.

Dans un mode de réalisation, il choisit la période ayant obtenu le meilleur score.

Dans un mode de réalisation, il choisit la période d'envoi la plus faible parmi les M1 périodes ayant obtenu le meilleur score (M1 valeur entière fixée strictement inférieure à n). Cela permet de favoriser les échanges fréquents de manière à assurer une bonne qualité de voisinage.

Dans un mode de réalisation, il choisit la période d'envoi la plus élevée parmi les M2 périodes ayant obtenu le meilleur score (M2 valeur entière fixée, strictement inférieure à n). Cela permet de favoriser les échanges peu fréquents de manière à limiter au maximum la consommation de bande passante.Dans une étape 104, le noeud déclenche l'actualisation de la valeur de T_diff à la valeur de période sélectionnée par le module d'évaluation 23 ; cette valeur T_diff actualisée est appliquée par le noeud durant les T_calc prochaines secondes (jusqu'à la nouvelle prise de décision selon le processus 101-104).

Il a ainsi été décrit, en référence aux figures et dans un mode de réalisation particulier, une solution générique (pouvant s'appliquer à différentes familles de réseaux, telles que véhiculaires, fantassins ... et à un large panel de scénarios opérationnels) permettant d'adapter dynamiquement (tout au long de la situation opérationnelle) la période d'envoi des messages périodiques.

La solution selon l'invention est décentralisée. Les noeuds sont capables de prendre des décisions indépendamment les uns des autres. L'overhead induit par la solution est donc nul (dans la mesure où les informations fournies au réseau de neurones peuvent être disponibles localement).

Il est bien prévu dans la RFC 6130 qui décrit le protocole de Découverte de voisinage dans les MANETs qu'il est possible d'adapter les périodes d'envoi des messages HELLO : *"HELLO_INTERVAL may be fixed, or may be dynamic. For example, HELLO_INTERVAL may be backed off due [...] network stability".*

La solution peut prendre en compte des contraintes opérationnelles de manière à assurer un certain niveau de QoS. Pour ce faire, ces contraintes peuvent être intégrées dans la phase d'entraînement du réseau de neurones décrite ci-après.

L'invention permet en outre d'adapter la période de façon anticipée par rapport aux changements dans le réseau.

Par exemple, indiquer dans le vecteur d'entrée l'évolution de la puissance des noeuds voisins et/ou des coordonnées géographiques (GPS ou autres) et/ou le voisinage à deux sauts (ou à davantage de sauts) permet au réseau de neurones d'anticiper les modifications de topologie du réseau (la disparition ou l'apparition d'un lien), notamment en estimant qu'il est probable que la modification survienne, et d'adapter la période T_diff en amont même de la survenue de la modification.

II est à présent décrit l'étape préliminaire 100_prél d'apprentissage du réseau de neurones 24 dans un mode de réalisation, en référence à la figure 2. Il s'agit dans le cas considéré d'un apprentissage par renforcement (« Deep Reenforcement Learning »). Le point de départ est un réseau de neurones avec certaines valeurs de poids, notées w0, d'initialisation. Par ailleurs, le réseau de noeuds cible (ici le réseau 10) a par exemple été modélisé par une simulation numérique de réseau simulant le fonctionnement des noeuds et dans lequel des scénarios sont « joués », mettant en oeuvre des communications entre des noeuds, des déplacements de noeuds, des fusions/séparations de groupes de noeuds (clusters) et simulant les scénarios réels usuellement rencontrés dans le réseau cible (même nombre de noeuds, même mobilité, etc ...).

Le réseau de neurones est entraîné en utilisant l'apprentissage profond par renforcement (« Deep Reinforcement Learning »). Par exemple, l'ensemble d'étapes suivant est alors réitéré.
- un scénario est lancé.
- au cours de ce scénario, tous les T_calc secondes, les noeuds du réseau simulé font des observations et fournissent ces observations (ou des données déduites de ces observations) au réseau de neurones sous la forme d'un vecteur de paramètres d'information (appelé ici « states »), tel que défini auparavant. La nature des informations varie en fonction de la solution, comme expliqué plus haut ;
- alors, le réseau de neurones fournit en sortie, pour chaque vecteur d'informations fournie par un noeud, pour chaque action possible, i.e. pour chaque valeur de période candidate Ti, i = 1 à n, un score, encore appelé Q_value_i. Dans le cas où il a été fixé trois valeurs de période distinctes possibles T1, T2, T3, le réseau de neurones ainsi calcule les scores respectivement notés Q_value1, Q_value2, Q_value3.

Deux cas de figure se présentent alors:
o Avec une probabilité alpha (alpha étant un paramètre prédéfini qui peut évoluer durant le processus d'entraînement) : le noeud applique l'action avec le meilleur score (supposons un cas où le meilleur score est Q_value2, l'action appliquée par le noeud est T2) (on entend ici par « appliquer l'action Ti», i= 1, 2 ou 3, le fait de de mettre en oeuvre par le noeud la nouvelle valeur Ti de période considérée) ;
o Avec une probabilité (1-alpha) : le noeud applique une action au hasard parmi T1, T2 ou T3.

Puis, pour cette action, une fois qu'il l'a appliquée pendant un cycle de durée T_calc, le noeud obtient alors une récompense r :
o s'il a bien respecté la contrainte opérationnelle prédéfinie (par exemple que les temps nécessaires à être découvert par chaque élément dans le voisinage sont bien inférieurs à un seuil fixé, ou encore que le temps moyen pour être découvert par l'ensemble des éléments voisins est inférieure à un seuil, ou encore que les tables de routage obtenues à l'aide de cette découverte sont suffisamment proches des tables de routage optimales et qu'il n'a pas envoyé trop de Hellos (i.e. un nombre de messages Hello -ou une bande passante correspondant à l'envoi de ces Hellos - inférieur à un seuil déterminé), une valeur grande est affectée à r ;
o sinon le noeud est pénalisé (valeur de r faible).

Le vecteur target = (Q_value_1, r, Q_value_3) est alors créé, où r vient remplacer le score de l'action choisie (dans ce cas r remplace Q_value_2) et on continue à entraîner le réseau avec ce vecteur cible. De manière simplifiée, on vient ainsi dire au réseau de neurones qu'il aurait dû obtenir la valeur « r » pour l'action T2, et non pas le score Q_value_2 qu'il avait obtenu. Les poids w du réseau de neurones sont alors adaptés de manière à fournir un réseau de neurones qui, dans le futur, renverra en sortie le vecteur (Q_value_1, r, Q_value_3) lorsque les même informations « states » lui seront fournies.

Ces étapes sont réitérées jusqu'à ce que la différence entre le score prédit par le réseau de neurones pour l'action choisie soit suffisamment proche (par rapport à un seuil prédéfini par exemple) de la valeur r qu'il aurait effectivement dû obtenir : la convergence du réseau de neurones est alors estimée suffisante.

A l'issue de cette phase préliminaire d'apprentissage, le réseau de neurones obtenu 24 est implémenté dans chaque noeud N du réseau, au sein du module d'évaluation de périodes 23.

Dans un mode de réalisation, l'apprentissage est terminé une fois le réseau de neurones sorti de la phase préliminaire d'apprentissage. Dans un autre mode de réalisation, le réseau de neurones continue à apprendre (à mettre à jour ses poids) une fois déployé dans les noeuds. Pour ce faire, il est indispensable que le noeud puisse évaluer la pertinence de l'action choisie. Par exemple, si la pertinence est définie par le temps de découverte d'un noeud voisin, le noeud de communication doit être capable de déterminer les temps de découverte de tous ses noeuds voisins obtenus en pratique à la suite d'une action.

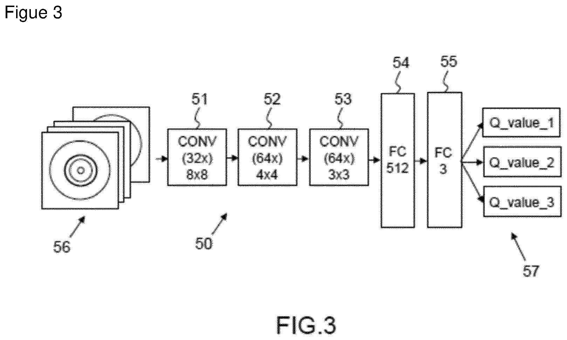

La figure 3 représente schématiquement l'architecture 50 d'un réseau de neurones 24 mis en oeuvre dans un noeud N dans un mode de réalisation de l'invention.

Le réseau de neurones 24 comporte une couche de neurones de type convolutionnelle 51 comportant 32 filtres en série de taille 8x8, une couche convolutionnelle 52 de neurones comportant 64 filtres en série de taille 4x4, une couche 53 de neurones de type « Fully-Connected » comportant 512 neurones en sortie, une couche 54 de neurones de type « Fully-Connected » comportant 3 neurones en sortie qui correspondent à l'interface de sortie 57 du réseau de neurones 24 délivrant les n scores (sur la figure 3, n a été pris égal à 3, et T1 = 2s, T2 = 5s et T3 = 10s).

Dans l'exemple considéré, le vecteur des paramètres d'information en entrée du réseau de neurones 24 du noeud N décrit l'évolution de la distance de chaque noeud voisin dudit noeud N, évaluée par le noeud N, depuis 20 secondes, par pas de 1s et T_calc = 20 s.

Dans l'implémentation, ce vecteur des paramètres d'informations est fourni au réseau de neurones 24 sous forme de 20 images, où le temps écoulé entre deux images successives est d'une seconde.

Sur une image correspondant au temps t, un cercle a été tracé, associé à chaque noeud voisin, autour du centre de l'image (correspondant à la position dudit noeud) ; le rayon du cercle est la distance entre ledit noeud et le noeud voisin au temps t estimée par le noeud en fonction de la puissance reçue par le noeud N en provenance du noeud voisin (on considère qu'un noeud est capable de déduire sa distance avec un noeud voisin à partir d'un signal reçu en provenance du noeud voisin en question). L'image est codée ainsi : la matrice de l'image a pour coefficient 0 partout sauf en les pixels correspondant aux périmètres des cercles.

Dans un mode de réalisation, l'intensité des pixels (valeur généralement comprise entre 0 et 1) décrivant les cercles varient en fonction de la fraîcheur de l'information de distance calculée. Plus l'information de distance a été calculée récemment, plus l'intensité du pixel se rapproche de 1. A l'inverse, pour les informations de distance obtenues plusieurs secondes auparavant, l'intensité des pixels décrivant le cercle se rapprochent de 0. Dans ce mode de réalisation, le vecteur de paramètres indique en outre cet aspect de fraîcheur de l'information, et le réseau de neurones se fie davantage aux informations obtenues récemment qu'aux informations anciennes, qui peuvent être devenues obsolètes.

Dans l'exemple décrit ci-dessus en référence aux figures, il a été considéré des messages de contrôle périodiques de type HELLO associés à une période de diffusion T_diff. L'invention peut bien sûr s'appliquer de façon similaire aux messages de type Topology Control du réseau 10.

Dans l'exemple décrit ci-dessus, il a été considéré des messages de contrôle périodiques HELLO ou TC dans le cadre d'un protocole de routage. L'invention est bien sûr implémentable relativement à tout message périodique mis en oeuvre dans un protocole de routage. Elle est en outre implémentable à des messages périodiques autres que ceux mis en oeuvre dans les protocoles de routage dans tout réseau de communication comprenant des noeuds de communication, en particulier sans fil et mobiles et présentant une problématique de consommation de bande passante par ces messages périodiques et de circulation suffisante des informations contenues dans les messages, . Par exemple, l'invention peut s'appliquer aux messages de localisation (envoi de coordonnées GPS par exemple) diffusés périodiquement par les noeuds d'un réseau ad-hoc afin d'indiquer leur position géographique à leur voisinage. L'invention peut permettre d'adapter dynamiquement la période de diffusion de ces messages de localisation en fonction du contexte opérationnel (état de la bande passante, mobilité des noeuds,...), les vecteurs de paramètres caractérisant alors la stabilité des liens du voisnage du noeud en fonction notamment la mobilité des noeuds.

## Revendications

1. Procédé d'adaptation dynamique de la période d'envoi, T_diff, de messages périodiques émis par un noeud (N) d'un réseau de communication sans fil de noeuds (10) ad-hoc à destination de noeuds du réseau,
ledit procédé étant **caractérisé en ce que** le noeud (N) comprend un module d'évaluation (23) adapté pour déterminer la prochaine période à appliquer et comprenant un réseau de neurones (24) issu d'une phase d'apprentissage préalable et tel que le réseau de neurones (24) calcule, en fonction d'un vecteur de paramètre(s) qui lui est fourni en entrée et qualifiant la stabilité courante des liens de voisinage du noeud, un score (Q_value_1,...., Q_value_n) pour chacune d'une pluralité de valeurs distinctes candidates de période d'envoi (T1, ..., Tn) desdits messages par le noeud, ledit score évaluant la pertinence de la mise en oeuvre de ladite valeur de période d'envoi en fonction dudit vecteur de paramètre(s) ;
le procédé comprenant en outre les étapes suivantes mises en oeuvre par ledit noeud toutes les T_calc secondes, T_calc > T_diff:
- fourniture au module d'évaluation (23) d'une valeur actualisée du vecteur de paramètre(s) qualifiant la stabilité courante des liens de voisinage du noeud ;
- calcul par le réseau de neurones (24) de scores (Q_value_1,...., Q_value_n) associés chacun à une valeur distincte de période d'envoi (T₁, ..., Tₙ) en fonction de ladite valeur actualisée du vecteur de paramètre(s) ;
- sélection, par le module d'évaluation (23), d'une desdites des valeurs distinctes (T₁, ..., Tₙ) candidates de période d'envoi en fonction des scores calculés ;
- assignation de la valeur sélectionnée à T_diff pendant la durée T_calc.

2. Procédé d'adaptation dynamique selon la revendication 1, selon lequel lesdits messages émis toutes les T_diff secondes par le noeud (N) sont des messages de contrôle émis conformément à un protocole de routage.

3. Procédé d'adaptation dynamique selon la revendication 2, selon lequel lesdits messages sont des messages d'un type au moins parmi les messages « HELLO » et « Topology Control » du protocole OLSR.

4. Procédé d'adaptation dynamique selon l'une des revendications précédentes, selon lequel un ou plusieurs paramètres du vecteur de paramètre(s) indique un ou des éléments parmi :
- la position géographique de noeud(s) voisin(s) ;
- la puissance du signal provenant de noeud(s) voisin(s) ;
- une caractérisation de la table de voisinage du noeud ;
- par noeud voisin, un nombre de dernières connexions et/ou déconnexions survenues vis-à-vis du noeud voisin ;
- le voisinage à au moins deux sauts du noeud ;
- l'évolution dans le temps de l'un quelconque de ces éléments.

5. Procédé d'adaptation dynamique selon l'une des revendications précédentes, selon lequel le module d'évaluation (23) sélectionne parmi les valeurs distinctes (T₁, ..., Tₙ) candidates de période d'envoi en fonction de leur score respectif (Q_value_1 ,...., Q_value_n) calculé l'une parmi :
- la valeur de période ayant obtenu le meilleur score ;
- la période d'envoi la plus petite parmi les M1 périodes ayant obtenu les meilleurs scores, M1 étant un entier prédéfini strictement inférieur au nombre de valeurs candidates ;
- la période d'envoi la plus grande parmi les M2 périodes ayant obtenu les meilleurs scores, M2 étant un entier prédéfini strictement inférieur au nombre de valeurs candidates.

6. Procédé d'adaptation dynamique selon l'une des revendications précédentes, selon lequel le réseau de neurones (24) est issu d'une phase d'apprentissage par renforcement préalable dans laquelle des scénarios opérationnels d'utilisation du réseau par les noeuds (N) sont joués au cours desquelles les étapes suivantes sont réitérées par cycle de T_calc secondes pour chacun d'une pluralité de noeuds :
- fourniture en entrée du réseau de neurones d'une valeur actualisée du vecteur de paramètre(s) qualifiant la stabilité courante des liens de voisinage du noeud ;
- calcul par le réseau de neurones de scores associés respectivement aux valeurs distinctes de période d'envoi en fonction de poids affectés respectivement aux neurones ;
- sélection d'une desdites valeurs de période d'envoi et affectation à T_diff de la valeur sélectionnée pendant la durée T_calc ;
- à l'issue de ladite durée T_calc, actualisation des valeurs des poids affectés à chaque neurone en fonction d'une évaluation du comportement du noeud pendant cette durée et d'une métrique de récompense définie au préalable.

7. Programme d'ordinateur, comprenant des instructions logicielles destinées à être stockées en mémoire (21) d'un noeud (N) d'un réseau (10) de communication sans fil de noeuds ad-hoc et qui lorsqu'elles sont exécutées sur un processeur (22) dudit noeud, mettent en oeuvre le procédé selon l'une des revendications précédentes.

8. Noeud (N) d'un réseau (10) de communication sans fil de noeuds ad-hoc adapté pour envoyer à la période T_diff des messages périodiques à destination de noeuds du réseau, **caractérisé en ce que** le noeud (N) comprend un module d'évaluation (23) adapté pour déterminer la prochaine période à appliquer et comprenant un réseau de neurones (24) issu d'une phase d'apprentissage préalable et tel que le réseau de neurones (24) est adapté pour calculer, en fonction d'un vecteur de paramètre(s) qui lui est fourni en entrée et qualifiant la stabilité courante des liens de voisinage du noeud, un score (Q_value_1,...., Q_value_n) pour chacune d'une pluralité de valeurs distinctes candidates de période d'envoi (T1, ..., Tn) desdits messages par le noeud, ledit score (Q_value_1,...., Q_value_n) évaluant la pertinence de la mise en oeuvre de ladite valeur de période d'envoi en fonction dudit vecteur de paramètre(s) ; dans lequel toutes les T_calc secondes, T_calc > T_diff :
ledit noeud étant adapté pour fournir au module d'évaluation une valeur actualisée du vecteur de paramètre(s) ; le réseau de neurones est adapté pour alors calculer les scores (Q_value_1,...., Q_value_n) associés chacun à une valeur distincte de période d'envoi (T1, ..., Tn) en fonction de ladite valeur actualisée du vecteur de paramètre(s) ; le module d'évaluation est adapté pour sélectionner une desdites des valeurs distinctes candidates de période d'envoi (T1, ..., Tn) en fonction des scores calculés (Q_value_1,...., Q_value_n) et pour assigner la valeur sélectionnée à T_diff pendant la durée T_calc.

9. Noeud selon la revendication 8, dans lequel lesdits messages émis toutes les T_diff secondes par le noeud sont des messages de contrôle émis conformément à un protocole de routage.

10. Réseau de communication sans fil de noeuds ad-hoc comprenant une pluralité de noeuds ad-hoc selon l'une des revendications 8-9.

## Patentansprüche

1. Verfahren zum dynamischen Anpassen der Sendeperiode, T_diff, von periodischen Nachrichten, die von einem Knoten (N) eines drahtlosen Ad-hoc-Knoten-Kommunikationsnetzes (10) zu Knoten des Netzes gesendet werden,
wobei das Verfahren **dadurch gekennzeichnet ist, dass** der Knoten (N) ein Bewertungsmodul (23) umfasst, das zum Bestimmen der nächsten anzuwendenden Periode angepasst ist und ein neuronales Netz (24) umfasst, das aus einer vorherigen Lernphase stammt, und so, dass das neuronale Netz (24) in Abhängigkeit von einem Parametervektor, der ihm als Eingabe bereitgestellt wird und die aktuelle Stabilität der Nachbarschaftsverbindungen des Knotens qualifiziert, einen Score (Q_value_1, ..., Q_value_n) für jeden von einer Vielzahl von verschiedenen Kandidatenwerten für die Sendeperiode (T1, ..., Tn) der Nachrichten von dem Knoten berechnet, wobei der Score die Relevanz der Implementierung des Sendeperiodenwertes in Abhängigkeit von dem Parametervektor bewertet;
wobei das Verfahren ferner die folgenden alle T_calc Sekunden von dem Knoten implementierten Schritte umfasst, wobei T_calc > T_diff:
- Bereitstellen für das Bewertungsmodul (23), eines aktualisierten Wertes des Parametervektors, der die aktuelle Stabilität der Nachbarschaftsverbindungen des Knotens qualifiziert,
- Berechnen, durch das neuronale Netz (24), von Scores (Q_value_1,..., Q_value_n), die jeweils einem verschiedenen Sendeperiodenwert (T₁, ..., Tₙ) zugeordnet sind, in Abhängigkeit von dem aktualisierten Wert des Parametervektors;
- Auswählen, durch das Bewertungsmodul (23), eines der verschiedenen Kandidatenwerte (T₁, ..., Tₙ) für die Sendeperiode in Abhängigkeit von den berechneten Scores;
- Zuweisen des ausgewählten Wertes zu T_diff für die Dauer T_calc.

2. Verfahren zum dynamischen Anpassen nach Anspruch 1, wobei die alle T_diff Sekunden vom Knoten (N) gesendeten Nachrichten Kontrollnachrichten sind, die gemäß einem Routing-Protokoll gesendet werden.

3. Verfahren zum dynamischen Anpassen nach Anspruch 2, wobei die Nachrichten Nachrichten mindestens eines Typs aus den Nachrichten "HELLO" und "Topology Control" des OLSR-Protokolls sind.

4. Verfahren zum dynamischen Anpassen nach einem der vorhergehenden Ansprüche, wobei ein oder mehrere Parameter des Parametervektors eines oder mehrere der folgenden Elemente angeben:
- die geografische Position von einem oder mehreren Nachbarknoten;
- die Stärke des Signals, das von einem oder mehreren Nachbarknoten stammt;
- eine Charakterisierung der Nachbarschaftstabelle des Knotens;
- pro Nachbarknoten eine Anzahl von letzten Verbindungen und/oder Trennungen, die in Bezug auf den Nachbarknoten aufgetreten sind;
- die mindestens zwei Sprünge entfernte Nachbarschaft des Knotens;
- die zeitliche Entwicklung eines beliebigen dieser Elemente.

5. Verfahren zum dynamischen Anpassen nach einem der vorhergehenden Ansprüche, wobei das Bewertungsmodul (23) aus den verschiedenen Kandidatenwerten (T₁, ..., Tₙ) für die Sendeperiode in Abhängigkeit von ihrem jeweiligen berechneten Score (Q_vaIue_1 ,...., Q_value_n) einen auswählt von:
- dem Wert einer Periode, die den besten Score erreicht hat;
- der kleinsten Sendeperiode unter den M1 Perioden, die die besten Scores erreicht haben, wobei M1 eine vordefinierte ganze Zahl strikt kleiner als die Anzahl von Kandidatenwerten ist;
- der größten Sendeperiode unter den M2 Perioden, die die besten Scores erreicht haben, wobei M2 eine vordefinierte ganze Zahl strikt kleiner als die Anzahl von Kandidatenwerten ist.

6. Verfahren zum dynamischen Anpassen nach einem der vorhergehenden Ansprüche, wobei das neuronale Netz (24) aus einer Lernphase durch vorherige Verstärkung stammt, in der operative Nutzungsszenarien des Netzes durch die Knoten (N) durchgespielt werden, während derer die folgenden Schritte in Zyklen von T_calc Sekunden für jeden von einer Vielzahl von Knoten wiederholt werden:
- Bereitstellen, als Eingabe in das neuronale Netz, eines aktualisierten Wertes des Parametervektors, der die aktuelle Stabilität der Nachbarschaftsverbindungen des Knotens qualifiziert,
- Berechnen, durch das neuronale Netz, von Scores, die jeweils den verschiedenen Sendeperiodenwerten zugeordnet sind, in Abhängigkeit von den Neuronen jeweils zugewiesenen Gewichtungen;
- Auswählen eines der Sendeperiodenwerte und Zuweisen des ausgewählten Wertes zu T_diff während der Dauer T_calc;
- Aktualisieren, nach Ablauf der Dauer T_calc, der Werte der jedem Neuron zugewiesenen Gewichtungen in Abhängigkeit von einer Bewertung des Verhaltens des Knotens während dieser Dauer und einer zuvor definierten Belohnungsmetrik.

7. Computerprogramm, das Software-Befehle umfasst, die zum Speichern im Speicher (21) eines Knotens (N) eines drahtlosen Ad-hoc-Knoten-Kommunikationsnetzes (10) bestimmt sind und die bei Ausführung auf einem Prozessor (22) des Knotens das Verfahren nach einem der vorhergehenden Ansprüche implementieren.

8. Knoten (N) eines drahtlosen Ad-hoc-Knoten-Kommunikationsnetzwerks (10), der zum Senden, in der Periode T_diff, von periodischen Nachrichten zu Knoten des Netzwerks angepasst ist,
**dadurch gekennzeichnet, dass** der Knoten (N) ein Bewertungsmodul (23) umfasst, das zum Bestimmen der nächsten anzuwendenden Periode angepasst ist und ein neuronales Netz (24) umfasst, das aus einer vorherigen Lernphase stammt, und so, dass das neuronale Netz (24) dafür angepasst ist, in Abhängigkeit von einem Parametervektor, der ihm als Eingabe bereitgestellt wird und die aktuelle Stabilität der Nachbarschaftsverbindungen des Knotens qualifiziert, einen Score (Q_value_1, ..., Q_value_n) für jeden von einer Vielzahl von verschiedenen Kandidatenwerten für die Sendeperiode (T1, ..., Tn) der Nachrichten von dem Knoten zu berechnen, wobei der Score (Q_value_1, ..., Q_value_n) die Relevanz der Implementierung des Sendeperiodenwertes in Abhängigkeit von dem Parametervektor bewertet; wobei alle T_calc Sekunden, T_calc > T_diff:
wobei der Knoten angepasst ist zum Bereitstellen, für das Bewertungsmodul, eines aktualisierten Wertes des Parametervektors; das Neuronennetz angepasst ist zum anschließenden Berechnen der Scores (Q_value_1,...., Q_value_n), die jeweils einem verschiedenen Sendeperiodenwert (T1, ..., Tn) zugeordnet sind, in Abhängigkeit von dem aktualisierten Wert des Parametervektors; das Bewertungsmodul angepasst ist zum Auswählen eines der verschiedenen Kandidatenwerte für die Sendeperiode (T1, ..., Tn) in Abhängigkeit von den berechneten Scores (Q_value_1,...., Q_value_n) und zum Zuweisen des ausgewählten Werts zu T_diff für die Dauer T_calc.

9. Knoten nach Anspruch 8, wobei die alle T_diff Sekunden vom Knoten gesendeten Nachrichten Kontrollnachrichten sind, die gemäß einem Routing-Protokoll gesendet werden.

10. Drahtloses Ad-hoc-Knoten-Kommunikationsnetz, das eine Vielzahl von Ad-hoc-Knoten nach einem der Ansprüche 8 bis 9 umfasst.

## Claims

1. A method for dynamically adapting the sending period, T_diff, for periodic messages transmitted by a node (N) of a wireless communication network (10) of ad-hoc nodes to nodes of the network,
said method being **characterised in that** the node (N) comprises an evaluation module (23) adapted to determine the next period to be applied and comprising a neural network (24) derived from a prior learning phase and such that the neural network (24) computes, as a function of a vector of parameter(s) that it is provided with as input and qualifying the current stability of the neighbouring links of the node, a score (Q_value_1,...., Q_value_n) for each one of a plurality of distinct sending period candidate values (T1,..., Tn) of said messages from the node, said score evaluating the relevance of implementing said sending period value as a function of said vector of parameter(s);
the method further comprising the following steps implemented by said node every T_calc seconds, with T_calc > T_diff:
- providing the evaluation module (23) with an updated value of the vector of parameter(s) qualifying the current stability of the neighbouring links of the node;
- computing, by means of the neural network (24), scores (Q_value_1,..., Q_value_n) each associated with a distinct sending period value (T₁, ..., Tₙ) as a function of said updated value of the vector of parameter(s);
- selecting, by means of the evaluation module (23), one of said distinct sending period candidate values (T₁ ,..., Tₙ) as a function of the computed scores;
- assigning the selected value to T_diff for the duration T_calc.

2. The dynamic adaptation method according to claim 1, wherein said messages transmitted every T_diff seconds by the node (N) are control messages transmitted in accordance with a routing protocol.

3. The dynamic adaptation method according to claim 2, wherein said messages are messages of at least one type from among the "HELLO" and "Topology Control" messages of the OLSR protocol.

4. The dynamic adaptation method according to any of the preceding claims, wherein one or more parameters of the vector of parameter(s) indicates one or more of the elements from among:
- the geographical position of one or more neighbouring nodes;
- the power of the signal originating from one or more neighbouring nodes;
- a characterisation of the neighbouring table of the node;
- per neighbouring node, a number of last connections and/or disconnections occurring with respect to the neighbouring node;
- the neighbourhood of at least two hops from the node;
- the evolution of any one of these elements over time.

5. The dynamic adaptation method according to any of the preceding claims, wherein the evaluation module (23) selects, from among the distinct sending period candidate values (T₁, ..., Tₙ) as a function of their respective computed score (Q_value_1,...., Q_value_n), one from among:
- the value of a period that obtained the best score;
- the shortest sending period from among the periods M1 that obtained the best scores, M1 being a predefined integer that is strictly less than the number of candidate values;
- the longest sending period from among the periods M2 that obtained the best scores, M2 being a predefined integer that is strictly less than the number of candidate values.

6. The dynamic adaptation method according to any of the preceding claims, wherein the neural network (24) is derived from a prior reinforcement learning phase, in which operational usage scenarios of the network by the nodes (N) are run during which the following steps are repeated per cycle of T_calc seconds for each one of a plurality of nodes:
- providing as input an updated value of the vector of parameter(s) into the neural network that qualifies the current stability of the neighbouring links of the node;
- computing, by means of the neural network, scores respectively associated with the distinct sending period values as a function of weights respectively assigned to the neurons;
- selecting one of said sending period values and assigning T_diff the selected value for the duration T_calc;
- updating, at the end of said duration T_calc, the values of the weights assigned to each neuron as a function of an evaluation of the behaviour of the node during this duration and of a previously defined reward metric.

7. A computer program, comprising software instructions intended to be stored in a memory (21) of a node (N) of a wireless communication network (10) of ad-hoc nodes and which, when they are executed on a processor (22) of said node, implement the method according to any of the preceding claims.

8. A node (N) of a wireless communication network (10) of ad-hoc nodes adapted to send, during the period T_diff, periodic messages to nodes of the network,
**characterised in that** the node (N) comprises an evaluation module (23) adapted to determine the next period to be applied and comprising a neural network (24) derived from a prior learning phase and such that the neural network (24) is adapted to compute, as a function of a vector of parameter(s) that it is provided with as input and qualifying the current stability of the neighbouring links of the node, a score (Q_value_1,...., Q_value_n) for each one of a plurality of distinct sending period candidate values (T1,..., Tn) of said messages from the node, said score (Q_value_1,...., Q_value_n) evaluating the relevance of implementing said sending period value as a function of said vector of parameter(s); wherein every T_calc seconds, T_calc > T_diff:
said node being adapted to provide the evaluation module with an updated value of the vector of parameter(s); the neural network is adapted to then compute the scores (Q_value_1,...., Q_value_n) each associated with a distinct sending period value (T1, ..., Tn) as a function of said updated value of the vector of parameter(s); the evaluation module is adapted to select one of said distinct sending period candidate values (T1, ..., Tn) as a function of the computed scores (Q_value_1,...., Q_value_n) and to assign the selected value to T_diff for the duration T_calc.

9. The node according to claim 8, wherein said messages transmitted every T_diff seconds by the node are control messages transmitted in accordance with a routing protocol.

10. A wireless communication network of ad-hoc nodes comprising a plurality of ad-hoc nodes according to any of claims 8 to 9.
